# EUROPEAN PATENT SPECIFICATION

(11) **EP 2 871 400 B1**
(45) Date of publication and mention of the grant of the patent: **13.04.2016**
(21) Application number: 14190412.8
(22) Date of filing: 27.10.2014
(51) Int. Cl.: F16L 59/02

(54) **Pipe element for insulating at least one pipe**
Rohrelement zum Isolieren mindestens eines Rohres
Élément de tuyau d'isolation d'au moins un tuyau

(30) Priority: 07.11.2013 FI 20136098
(43) Date of publication of application: 13.05.2015
(73) Proprietor: Pipe-Modul Oy, 50150 Mikkeli (FI)
(72) Inventor: Lievonen, Juha, 50600 Mikkeli (FI)
(74) Representative: Berggren Oy Ab

(56) References cited:
- WO-A1-92/05381
- FR-A1- 2 729 210
- GB-A- 1 538 550
- GB-A- 2 443 832

## Description

### Technical field

The application relates generally to a pipe element for insulating at least one pipe.

### Background

The installation and insulation in outdoor spaces of water and ventilation pipes used in buildings has been traditionally implemented by using pipe supports to attach the pipe to building structures, such as to a wall or in a building with ventilated base floor to a subfloor in its crawl space, and by insulating the attached pipe with wool, cellular plastic, or polystyrene to be fitted around it. Wool insulations must be shaped during installation to envelope a pipe and secured with band clamps firmly around the pipe. It is further possible to cover the wool with highly pliable protective plastic or aluminum paper for shielding the insulation from varying weather conditions. Alternatively, use has been made of pre-shaped wool insulation products provided beforehand with aluminum paper. Cellular plastic insulations may also be pre-shaped products, whereby these, too, can be secured around a pipe faster than unshaped wool insulation. The pre-shaped wool insulations and cellular plastic insulations secured around a pipe are joined with each other by taping the same securely to each other.

The document FR 2 729 210 A1 discloses an insulation element made of foam surrounded by a plastic sheet. The insulation element is divided into two parts.

It is further possible to protect the insulated pipe from the weather and mechanical damage with an enclosure to be mounted thereon, which is attached directly to structures with screws such that the insulated pipe, along with its supports, is concealed thereunder.

A problem with the above-described insulation is the inconsistent quality of insulation, particularly when using wool, as well as the slowness and high price of insulation and installation.

### Summary

It is one objective of the invention to eliminate some of the problems encountered in prior known insulation solutions for pipes. Another objective is to provide consistent insulation for pipes connectable to an apparatus intended for plumbing, ventilation, and waste heat recovery (WHR), to facilitate, expedite, and reduce the price of insulation and installation, as well as to tidy up the appearance, i.e. encapsulation, of insulated pipes. A still further objective is to provide the insulation with room for power and telecommunications cables.

The one objective of the invention is achieved with a pipe element of claim 1.

According to one embodiment, there is provided a pipe element for insulating at least one pipe, which pipe element includes a base member, which enables an attachment of the pipe element to a mounting surface and which comprises an outer shell made up by a flat segment and sidewall segments, as well as at least one insulation which is fitted against an internal surface of the outer shell's flat segment and whose outer surface is formed with at least one groove for installing at least one pipe in the pipe element, said base member having the outer shell's ends adapted to bend over the insulation. The pipe element also includes a cover member, which is adapted to be attached to the base member and which comprises an outer shell made up by a flat segment and sidewall segments, as well as an insulation which is fitted at least against an internal surface of the outer shell's flat segment and whose outer surface is formed with at least one groove for installing at least one pipe in the pipe element, said cover member having the outer shell's ends adapted to bend so as to become co-directional with the ends of the base member's outer shell. The cover member's insulation has its corners provided along the pipe element's entire length with recesses, at least one recess of which settles, when the insulation is in place in the cover member, against a junction of its outer shell's flat segment and sidewall segments. The base member and the cover member have corners of their insulations provided along the pipe element's entire length with recesses, at least one recess of which in the base member and in the cover member settles, when the insulations are in place in the base member and in the cover member, against junctions of their outer shell's sidewall segments and the outer shell's ends bent over the insulations, and which provide a possibility of deflecting the outer shell's ends into the recesses, whereby the outer shell's ends settle in a flush relationship with the outer surface of the insulations.

Other embodiments are presented in dependent claims.

### Brief description of the figures

Exemplary embodiments of the invention will be explained more precisely in the detailed description of the figures with reference to the accompanying figures, in which
- figs. 1a-1c: show an opened and closed pipe element according to a first embodiment in a perspective view and in cross-sections with details,
- figs. 2a-2c: show an opened and closed pipe element according to a second embodiment in cross-sections and in a perspective view of the base member, and
- figs. 3a-3b: show an opened and closed pipe element according to a third embodiment in cross-sections.

### Detailed description of the figures

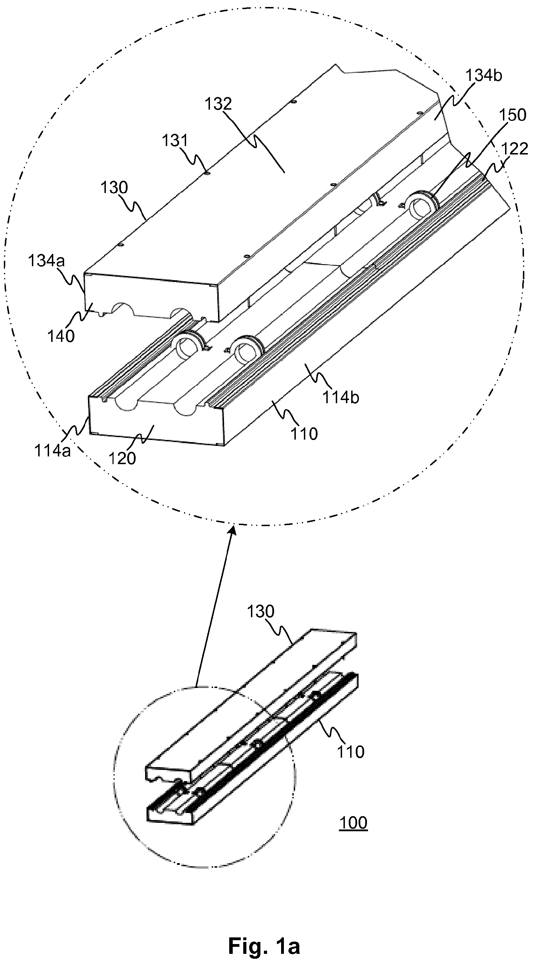

In figs. 1a-1c is shown a pipe element 100, which is intended for insulating at least one pipe connectable to a WHR apparatus and which includes a base member 110 enabling an attachment of the pipe element 100 to a mounting surface and a cover member 130 adapted to be attached to the base member 110.

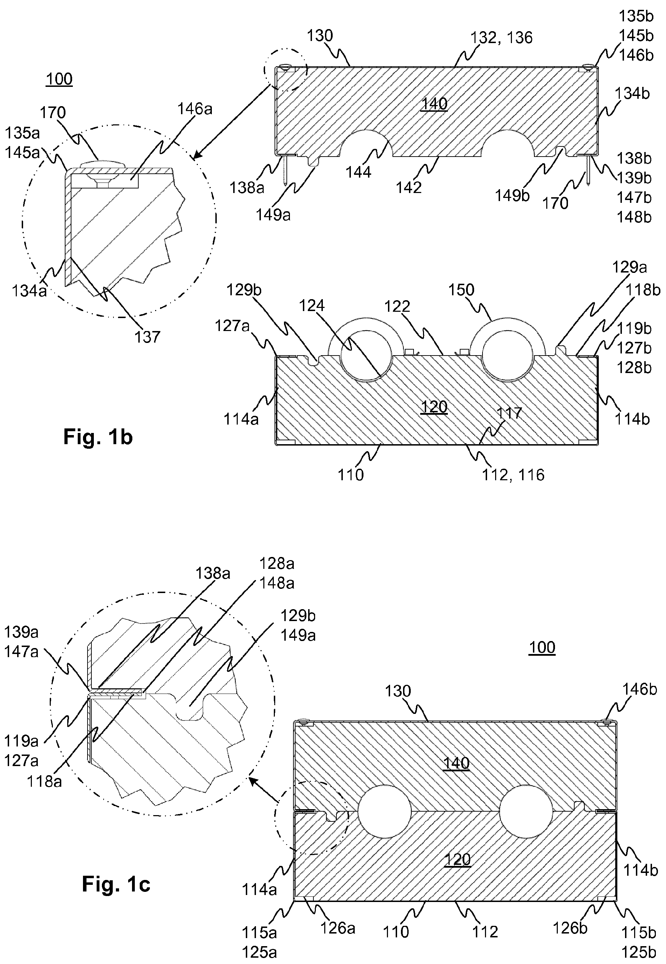

Fig. 1 a shows the pipe element 100 with the cover member 130 lifted off the base member 110. The base member 110 is provided with previously fitted pipe supports 150 and it is first to be mounted for example on an exterior wall of the building. The base member 110 can be attached to a wall by means of fasteners extending therethrough, for example wood or sheet metal screws.

Pipes - possibly also power and telecommunications cables in embodiments to be described hereinafter - are fitted in the pipe supports 150 followed by securing the cover member 130 in a closed position for a complete installation.

The cover member 130, provided with an insulation 140, can be attached to the base member 110 by means of fasteners 170 extending therethrough from the direction of the cover member's flat segment 132 co-directionally with the cover member's 130 sidewall segments 134a, 134b. The fasteners 170 can be for example wood screws that can be concealed with plugs for visual appearance. There are holes 131 in an outer shell 136 for the fasteners 170.

As shown in the figures, the insulations 120, 140 can be formed of a single unitary piece of insulation or several pieces of insulation.

The pipe element 100, as also the embodiments to be presented hereinafter, can have dimensions for example as follows: width 150, 350 or 400 mm contingent on the number of pipes, height 120, 160 or 180 mm, and length 2000, 2500 or 3000 mm. Alternatively, it can also be manufactured to other dimensions of width, height and length and these are subject to considerable variations according to intended use.

For example, insulation for the pipes of WHR equipment can be implemented modularly from sections of pipe elements 100, which are joined together. In all sections, however, the basic construction of a pipe element 100 is the same, possibly varying just in terms of dimensions and shapes. Varying shapes may include for example corner pieces, T-branches and the like.

Figs. 1b and 1c show the pipe element 100 in more detailed constructional views.

The base member 110 comprises a substantially U-shaped outer shell 116 made up by a flat segment 112 and sidewall segments 114a, 114b, and an insulation 120 fitted beforehand against an internal surface 117 of the outer shell 116. The insulation 120 has its outer surface 122 formed with two grooves 124 for installing at least one pipe in the pipe element 100. As opposed to the figures, the number of grooves can also be one or upwards of three. Each groove 124 is fitted with at least one pipe support 150 for securing a pipe. As shown in the figures, the outer shell 116 has its ends 118a, 118b bent over the insulation 120.

The insulation 120 can have both corners 125a, 125b of its bottom edge, i.e. its surface coming against the internal surface 117, provided along the pipe element's 100 entire length with recesses 126a, 126b which settle, when the insulation is in place in the base member 110, against junctions 115a, 115b of its flat segment 112 and its sidewall segments 114a, 114b.

The cover member 130 is adapted for an attachment with the base member 110 and comprises a substantially U-shaped outer shell 136 made up by a flat segment 132 and sidewall segments 134a, 134b, as well as a previously installed insulation 140 fitted against an internal surface 137 of the flat segment 132. The insulation 140 has its outer surface 142 also formed with a number of grooves 144 identical to the number of the base member's grooves 124 for a pipe and the outer shell 136 has both of its ends 138a, 138b adapted to bend over the insulation 140 co-directionally with the ends 118a, 118b of the base member's 110 outer shell 116.

The outer shells 116, 136 are made from zinc-plated sheet metal, from example from zinc-coated steel sheet or other sheet metal, or optionally from electro zinc coated steel sheet. Alternatively, it is also possible to use coated or pre-painted sheet metal.

The cover member 130 has its insulation 140 provided at both corners 145a, 145b of its bottom edge, i.e. its surface coming against the internal surface 137, along the pipe element's 100 entire length with recesses 146a, 146b, so-called countersinks for screws 170, which settle, when the insulation 140 is in place, against junctions 135a, 135b of the outer shell's 136 flat segment 132 and sidewall segments 134a, 134b. The recesses 146a, 146b facilitate fitting the insulation 140 in the cover member 130 and enhance attachment of the cover member 130 for example with the screws 170 to the base member 110 as the heads thereof are not left exposed on the surface of the pipe element 100.

In addition, the insulations 120, 140 have both corners 127a, 127b, 147a, 147b of their outer surface 122, 142 provided along the pipe element's 100 entire length with recesses 128a, 128b, 148a, 148b, which settle in the base member 110 and in the cover member 130 against junctions 119a, 119b, 139a, 139b of the sidewall segments 114a, 114b, 134a, 134b and deflected ends 118a, 118b, 138a, 138b of their outer shells 116, 136. The recesses 128a, 128b, 148a, 148b provide a possibility of bending the ends 118a, 118b, 138a, 138b in such a way that the ends 118a, 118b, 138a, 138b settle in a position flush with the outer surface 122, 142 of the insulations 120, 140 and enable a tight attachment and insulation for the base member 110 and the cover member 130.

The insulations 120 are identical provided that the base member 110 has the corners 125a, 125b of its insulation 120 formed with the aforesaid recesses 126a, 126b. Thereby is achieved a reduction of manufacturing costs as insulations 120, 140 of just one type of cross-sectional profile need be produced for the pipe element 100.

The cover member 130 can have the outer surface 142 of its insulation 140 provided with at least one insulating male tongue 149a along the pipe element's 100 entire length. In this case, each insulating male tongue 149a is adapted to be fitted in an insulating female groove 129b present at a matching location along an entire length of the pipe element 100 in the outer surface 122 of the insulation 120 of the base member 110. Alternatively - or in addition to the former - the insulation 120 has its outer surface 122 provided with at least one similar insulating male tongue 129a and each insulating male tongue 129a is adapted to be fitted in an insulating female groove 149b present at a matching location along the pipe element's 100 entire length in the outer surface 142 of the insulation 140.

The material for the insulations 120, 140 of the base member 110 and the cover member 130 - just like in embodiments to be described hereinafter - is for example expanded polystyrene (EPS), extruded polystyrene (XPS), or polyurethane (SPU).

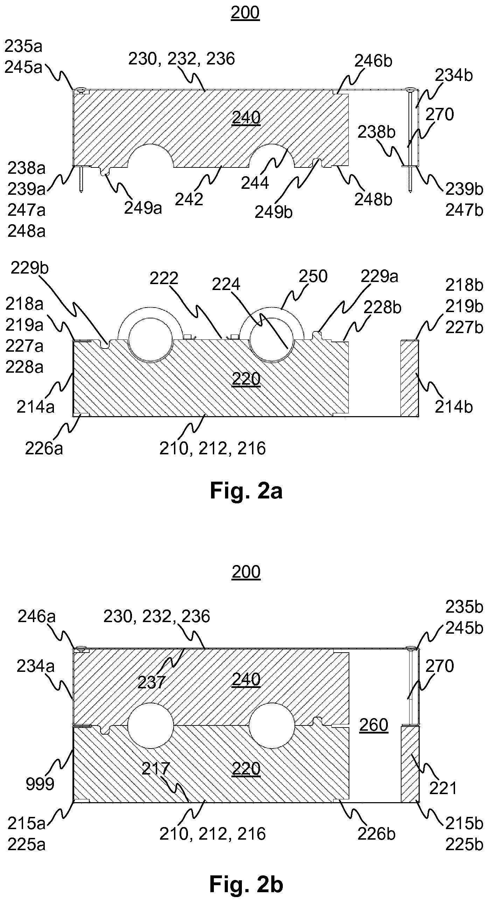

In figs. 2a-2c is shown a pipe element 200, for example a WHR element, comprising a space 260 suitable for the installation of at least one power or telecommunications cable.

The pipe element 200 includes a base member 210, which comprises an outer shell 216 made up by a flat segment 212 and sidewall segments 214a, 214b, as well as an insulation 220 fitted against an internal surface 217 of the flat segment 212 and having its outer surface 222 formed with two grooves 224 for pipes. As opposed to the figures, the number of grooves 224 can also be one or upwards of three and each groove 224 is fitted with at least one pipe support 250. In addition, the base member 210 comprises an extra insulation 221 installed against the sidewall segment 214b, the purpose of which is to disallow the migration of power or telecommunications cables next to the sidewall segment 214b for avoiding damage thereto in the process of attaching a cover member 230 with fasteners 270. The outer shell 216 has its end 218a adapted to bend over the insulation 220 and its end 218b, in turn, over the extra insulation 221 for placing the extra insulation 221 between the end 218b and the flat segment 212.

The insulation 220 can have both corners 225a, 225b of its bottom edge provided along the entire length of the pipe element 200 with recesses 226a, 226b, one recess 226a of which settles against a junction 215a of the flat segment 212 and the sidewall segment 214a. The other recess, on the other hand, settles against the space 260.

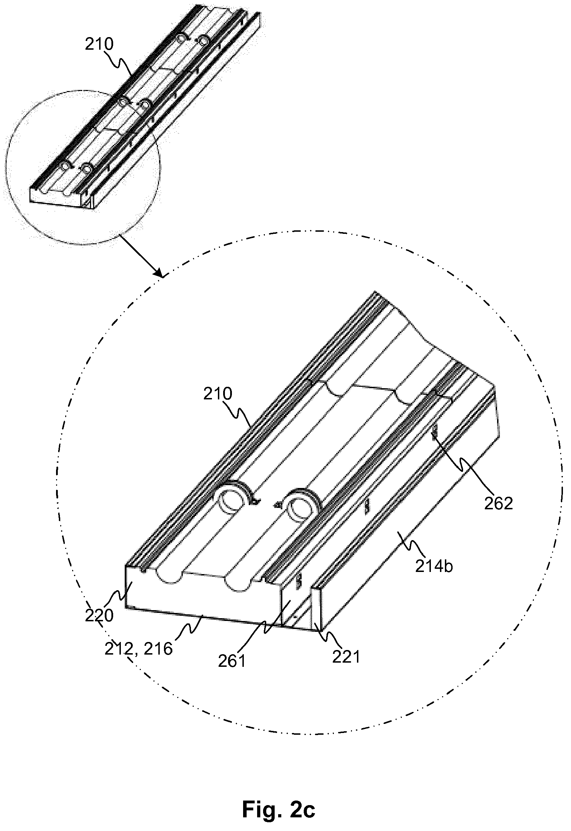

The outer shell 216 can have its internal surface 217 provided with brackets enabling the attachment of power or telecommunications cables thereto for example with cable ties. Alternatively - or in addition - the space can be provided with a supporting plate 261 shown in fig. 2c, which is attached to the internal surface 217 of the outer shell 216. The supporting plate 261 comprises a plurality of brackets 262, which enable the attachment of power or telecommunications cables thereto for example with cable ties, and whose edge, comprising the brackets 262, rises against an edge of the insulation 220 facing the space 260.

The cover member 230 is adapted to be fastened to the base member 210 and comprises an outer shell 236 made up by a flat segment 232 and sidewall segments 234a, 234b, as well as an insulation 240 fitted at least against an internal surface 237 of the flat segment 232. The insulation 240 has its outer surface 242 formed with grooves 244 for pipes, the number of such grooves matching that of the base member's grooves 244. The outer shell 236 has its ends 238a, 238b adapted to bend over the insulation 240 co-directionally with ends 218a, 218b of the outer shell 216 of the base member 210.

Both corners 245a, 245b of the insulation 240 are provided along an entire length of the pipe element 200 with recesses 246a, 246b, one recess 246a of which settles against a junction 235a of the flat segment 232 and the sidewall segment 234a, thus facilitating installation of the insulation 240 in the cover member 230. The other recess 246b settles against the space 260.

The insulations 220, 240 have corners 227a, 227b, 247a, 247b of their outer surface 222, 242 provided along the pipe element's 200 entire length with recesses 228a, 228b, 248a, 248b, whereof the recesses 228a, 248a settle against junctions 219a, 239a of the sidewall segments 214a, 234a and the de-flected ends 218a, 238a, enabling the bending of the ends 218a, 238a so as to bring the same flush with the outer surface 222, 242 of the insulations 220, 240. The recesses 228b, 248b that settle against the space 260 are not absolutely necessary, but can be included for reasons of manufacturing technique.

As shown in the figures, the cover member 230 can have the outer surface 242 of its insulation provided with one or more insulating male tongues 249a along the pipe element's 200 entire length, and it is adapted to be fitted in an insulating female groove 229b present at a matching location along an entire length of the pipe element 200 in the outer surface 222 of the insulation 220 of the base member 210. Alternatively - or in addition - the insulation 220 has its outer surface 222 provided, as shown in the figure, with one or more similar insulating male tongues 229a along the pipe element's 200 entire length, and it is respectively adapted to be fitted in an insulating female groove 249b present in the insulation 240 at a matching location along the pipe element's 200 entire length.

The material for the insulations 220, 221, 240 is expanded polystyrene, extruded polystyrene, or polyurethane.

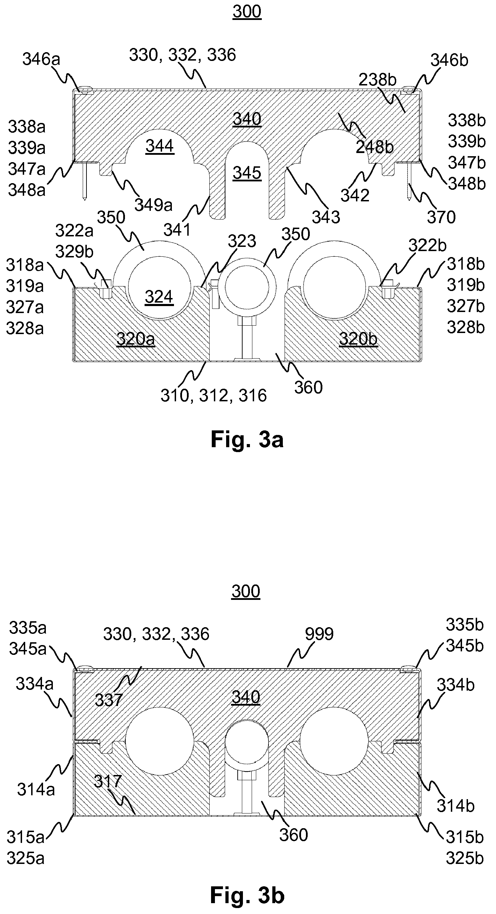

In figs. 3a and 3b is shown a pipe element 300, for example a WHR element, for insulating at least one pipe, comprising a space 360 intended for power or telecommunications cables.

The pipe element 300 includes a base member 310, which comprises an outer shell 316 made up by a flat segment 312 and sidewall segments 314a, 314b, as well as corner insulations 320a, 320b fitted against an internal surface 317 of the flat segment 312 and having an outer surface 322a, 322b thereof formed with a groove 324 for a pipe. Each groove 324 is fitted with at least one pipe support 350.

The outer shell 316 has its ends 318a, 318b adapted to bend over the insulations 320a, 320b when the insulations 320a, 320b have been set in place at junctions 315a, 315b of the flat segment 312 and the sidewall segments 314a, 314b in such a way that between the insulations 320a, 320b is left a vacant space 360. In this space 360 can be present at least one pipe support 350 mounted on the internal surface 317 of the outer shell 316.

The internal surface 317 can be further provided with brackets, enabling the attachment of power or telecommunications cables thereto for example with cable ties.

The cover member 330 is adapted for attachment to the base member 310 and comprises an outer shell 336 made up by a flat segment 332 and sidewall segments 334a, 334b, as well as an insulation 340 fitted against an internal surface of the flat segment 332. The insulation 340 has its outer surface 342 formed with three grooves 344, 345 for pipes.

On either side of one groove 345 are established space tongues 341 with rounded ends along the pipe element's 300 entire length in such a way that, when attaching the cover member 330 to the base member 310, the space tongues 341 settle, as shown in fig. 3b, firmly against the insulations 320a, 320b of the base member 310 creating a space 360 between the space tongues. Corners 323 of the insulations 320a, 320b coming against the space tongues 341 are rounded and so are tongue butts 343 coming against the insulations 320a, 320b. As opposed to the figures, the space tongues 341 may also extend all the way to the internal surface 317 of the outer shell 316 for a further improvement in the insulation of the space 360.

The outer shell 336 has its ends 338a, 338b adapted to bend over the insulation 340 co-directionally with the ends 318a, 318b of the outer shell 316 of the base member 310.

The insulation 340 has both of its corners 345a, 345b provided along the pipe element's 300 entire length with recesses 346a, 346b, which settle against a junction 335a, 335b of the flat segment 332 and the sidewall segments 334a, 334b for an easier installation of the insulation 340 in the cover member 330.

The insulations 320a, 320b, 340 have corners 327a, 327b, 347a, 347b thereof provided along the pipe element's 300 entire length with recesses 328a, 328b, 348a, 348b, which settle against junctions 319a, 319b, 339a, 339b of the sidewall segments 314a, 314b, 334a, 334b and the deflected ends 318a, 318b, 338a, 338b, providing a possibility of bending the ends 318a, 318b, 338a, 338b for bringing the same flush with the outer surface 322a, 322b, 342 of the insulations 320a, 320b, 340.

As opposed to the preceding embodiments, the cover member 330 has the outer surface 342 of its insulation 340 provided with two insulating male tongues 349a along the pipe element's 300 entire length, and those are adapted to be fitted in insulating female grooves 329b present in outer surfaces 322a, 322b of the insulations 320a, 320b along the pipe element's 300 entire length. Alternatively - or in addition - the insulating male tongues 349a and the insulating female grooves 329b can be implemented as presented in the preceding embodiments and/or the insulations 320a, 320b have the outer surface 322a, 322b thereof provided along the pipe element's 300 entire length with insulating male tongues and these are adapted to be fitted in insulating female grooves present in the outer surface 342 of the insulation 340 along the pipe elements 300 entire length.

Described above are just a few exemplary embodiments of the invention. The principle according to the invention can be naturally varied within the scope of protection defined by the claims, regarding for example implementation details as well as fields of use.

## Claims

1. A pipe element (100, 200, 300) for insulating at least one pipe, said pipe element comprising
a base member (110, 210, 310), which enables attachment of the pipe element to a mounting surface and which comprises an outer shell (116, 216, 316) made up by a flat segment (112, 212, 312) and sidewall segments (114a, 114b, 214a, 214b, 314a, 314b), as well as at least one insulation (120, 220, 320a, 320b, 321) fitted against an internal surface (117, 217, 317) of the outer shell's flat segment and having its outer surface (122, 222, 322a, 322b) formed with at least one groove (124, 224, 324) for installing at least one pipe in the pipe element, in which base member the outer shell has its ends (118a, 118b, 218a, 218b, 318a, 318b) adapted to bend over the insulation, and
a cover member (130, 230, 330), which is adapted for attachment to the base member and which comprises an outer shell (136, 236, 336) made up by a flat segment (132, 232, 332) and sidewall segments (134a, 134b, 234a, 234b, 334a, 334b), as well as an insulation (140, 240, 340) fitted at least against an internal surface (137, 237, 337) of the outer shell's flat segment and having its outer surface (142, 242, 342) formed with at least one groove (144, 244, 344) for installing at least one pipe in the pipe element, in which cover member the outer shell has its ends (138a, 138b, 238a, 238b, 338a, 338b) adapted to bend co-directionally with the ends of the base member's outer shell,
**characterized in that**
the cover member has corners (145a, 145b, 245a, 245b, 345a, 345b) of its insulation provided along the pipe element's entire length with recesses (146a, 146b, 246a, 246b, 346a, 346b), at least one recess (146a, 146b, 246a, 346a, 346b) of which settles, when the insulation is in place in the cover member, against a junction (135a, 135b, 235a, 335a, 335b) of the flat segment and the sidewall segment (134a, 134b, 234a, 334a, 334b) of its outer shell, and
the base member and the cover member have corners (127a, 127b, 147a, 147b, 227a, 227b, 247a, 247b, 327a, 327b, 347a, 347b) of their insulations provided along the pipe element's length with recesses (128a, 128b, 148a, 148b, 228a, 228b, 248a, 248b, 328a, 328b, 348a, 348b), whereof at least one recess (128a, 128b, 148a, 148b, 228a, 248a, 328a, 328b, 348a, 348b) of the base member and the cover member settles, when the insulations (120, 220, 320a, 320b, 140, 240, 340) are in place in the base member and in the cover member, against junctions (119a, 119b, 219a, 319a, 319b, 139a, 139b, 239a, 339a, 339b) of their outer shell's sidewalls (114a, 114b, 214a, 314a, 314b, 134a, 134b, 234a, 334a, 334b) and the outer shell's ends (118a, 118b, 218a, 318a, 318b, 138a, 138b, 238a, 338a, 338b) bent over the insulations, and which enable a deflection of the outer shell's ends into the recesses whereby the outer shell's ends settle in a flush relationship with the outer surface of the insulations.

2. A pipe element according to claim 1, wherein the base member has corners (125a, 125b, 225a, 225b, 325a, 325b) of its insulation provided along the pipe element's entire length with recesses (126a, 126b, 226a, 226b, 326a, 326b), at least one recess (126a, 126b, 226a, 326a, 326b) of which settles, when the insulation is in place in the base member, against a junction (115a, 115b, 215a, 315a, 315b) of the flat segment and the sidewall segment (114a, 114b, 214a, 314a, 314b) of its outer shell.

3. A pipe element according to any of the preceding claims, wherein the cover member has the outer surface of its insulation provided along the pipe element's entire length with at least one insulating male tongue (149a, 249a, 349a), said at least one insulating male tongue being adapted to be fitted in at least one insulating female groove (129b, 229b, 329b) present in the outer surface of the base member's insulation along the pipe element's entire length, and/or the base member has the outer surface of its insulation provided along the pipe element's entire length with at least one insulating male tongue (129a, 229a, 329a) along the pipe element's entire length, said at least one insulating male tongue being adapted to be fitted in at least one insulating female groove (149b, 249b, 349b) present in the outer surface of the cover member's insulation along the pipe element's entire length.

4. A pipe element according to any of the preceding claims, wherein each groove of the base member is fitted with at least one pipe support (150, 250, 350) for securing a pipe to the pipe element.

5. A pipe element according to any of the preceding claims, wherein the material for insulations in the base member and in the cover member is expanded polystyrene, extruded polystyrene, or polyurethane.

6. A pipe element (100) according to any of the preceding claims, wherein the cover member (130) has both ends (138a, 138b) of its outer shell (136) adapted to bend over the insulation (140), the cover member (130) has both corners (145a, 145b) of its insulation (140) provided along the pipe element's (100) entire length with recesses (146a, 146b), which settle, when the insulation (140) is in place in the cover member (130), against conjunctions (135a, 135) of the flat segment (132) and the sidewall segments (134a, 134b) of its outer shell (136), and the base member (110) and the cover member (130) have both corners (127a, 127b, 147a, 147b) of their insulations (120, 140) provided along the pipe element's entire length with recesses (128a, 128b, 148a, 148b), which settle, when the insulations (120, 140) are in place in the base member (110) and in the cover member (130), against conjunctions (119a, 119b, 139a, 139b) of the sidewall segments (114a, 114b, 134a, 134b) of their outer shell (116, 136) and the ends (118a, 118b, 138a, 138b) of the outer shell (116, 136) bent over the insulations (120, 140).

7. A pipe element (200, 300) according to any of claims 1-5, which further includes a space (260, 360) for installing at least one power or telecommunications cable in the pipe element.

8. A pipe element (200) according to claim 7, which further includes brackets established on the internal surface (217) of the base member's (210) outer shell (216) for the attachment of at least one power or telecommunications cable to the base member (210) and an extra insulation (221), which is fitted against the sidewall segment (214b) of the base member's (210) outer shell (216) and on top of which settles the other deflected end (218b) of the base member's (210) outer shell (216).

9. A pipe element (300) according to claim 7, wherein the cover member (330) has an outer surface (342) of its insulation (340) formed with at least three grooves (344, 345) for installing pipes in the pipe element, and on either side of one groove (345) are established space tongues (341) along the pipe element's entire length, the base member (310) has its insulation (320a, 320b) constituted by two separate corner insulations (320a, 320b), both of which have their outer surface (322a, 322b) formed with at least one groove (324) and which settle at conjunctions (315a, 315b) of the flat segment (312) and the sidewall segments (314a, 314b) of the base member's (310) outer shell (316) in such a way that, when attaching the cover member (330) to the base member (310), the space tongues (341) settle against the base member's 8310) insulations (320a, 320b) establishing between the space tongues (341) a space (360) for installing at least one power or telecommunications cable.

10. A pipe element according to claim 9, wherein the space (360) in the base member (310) has at least one pipe support (350) mounted on the internal surface (317) of the outer shell (316).

## Patentansprüche

1. Rohrelement (100, 200, 300) zum Isolieren mindestens eines Rohrs, wobei das Rohrelement umfasst:
ein Basiselement (110, 210, 310), das ein Befestigen des Rohrelements an einer Montageoberfläche ermöglicht und einen Außenmantel (116, 216, 316), der aus einem Flachsegment (112, 212, 312) und aus Seitenwandsegmenten (114a, 114b, 214a, 214b, 314a, 314b) besteht, sowie mindestens eine Isolierung (120, 220, 320a, 320b, 321) umfasst, die gegen eine innere Oberfläche (117, 217, 317) des Flachsegments des Außenmantels montiert ist, wobei die äußere Oberfläche (122, 222, 322a, 322b) mit mindestens einer Nut (124, 224, 324) ausgebildet ist, um mindestens ein Rohr im Rohrelement zu installieren, wobei die Enden (118a, 118b, 218a, 218b, 318a, 318b) des Außenmantels des Basiselements so ausgebildet sind, dass sie sich über die Isolierung legen, und
ein Abdeckelement (130, 230, 330), das für ein Befestigen am Basiselement ausgebildet ist und einen Außenmantel (136, 236, 336), der aus einem Flachsegment (132, 232, 332) und aus Seitenwandsegmenten (134a, 134b, 234a, 234b, 334a, 334b) besteht, sowie eine Isolierung (140, 240, 340) umfasst, die mindestens gegen eine innere Oberfläche (137, 237, 337) des Flachsegments des Außenmantels montiert ist, wobei die äußere Oberfläche (142, 242, 342) mit mindestens einer Nut (144, 244, 344) ausgebildet ist, um mindestens ein Rohr im Rohrelement zu installieren, wobei die Enden (138a, 138b, 238a, 238b, 338a, 338b) des Außenmantels des Abdeckelements so ausgebildet sind, dass sie sich kodirektional mit den Enden das Außenmantels des Basiselements umlegen,
**dadurch gekennzeichnet, dass**
das Abdeckelement an seiner Isolierung Ecken (145a, 145b, 245a, 245b, 345a, 345b) aufweist, die entlang der Gesamtlänge des Rohrelements mit Rücksprüngen (146a, 146b, 246a, 246b, 346a, 346b) ausgebildet sind, wobei sich mindestens ein Rücksprung (146a, 146b, 246a, 346a, 346b), wenn sich die Isolierung in ihrem Platz im Abdeckelement befindet, in eine Verbindungsstelle (135a, 135b, 235a, 335a, 335b) des Flachsegments und des Seitenwandsegments (134a, 134b, 234a, 334a, 334b) des Außenmantels einfügt, und
das Basiselement und das Abdeckelement an ihren Isolierungen Ecken (127a, 127b, 147a, 147b, 227a, 227b, 247a, 247b, 327a, 327b, 347a, 347b) aufweisen, die entlang der Länge des Rohrelements mit Rücksprüngen (128a, 128b, 148a, 148b, 228a, 228b, 248a, 248b, 328a, 328b, 348a, 348b) ausgebildet sind, wovon sich mindestens ein Rücksprung (128a, 128b, 148a, 148b, 228a, 248a, 328a, 328b, 348a, 348b) des Basiselements und des Abdeckelements, wenn sich die Isolierungen (120, 220, 320a, 320b, 140, 240, 340) an ihrem Platz im Basiselement und im Abdeckelement befinden, in Verbindungsstellen (119a, 119b, 219a, 319a, 319b, 139a, 139b, 239a, 339a, 339b) der Seitenwände (114a, 114b, 214a, 314a, 314b, 134a, 134b, 234a, 334a, 334b) des Außenmantels einfügen, und sich die Enden (118a, 118b, 218a, 318a, 318b, 138a, 138b, 238a, 338a, 338b) des Außenmantels über die Isolierungen legen, so dass sich die Enden des Außenmantels in die Rücksprünge hinein umlegen können, wodurch sich die Enden des Außenmantels bündig in die äußere Oberfläche der Isolierungen einfügen.

2. Rohrelement nach Anspruch 1, bei dem das Basiselement an seiner Isolierung Ecken (125a, 125b, 225a, 225b, 325a, 325b) aufweist, die entlang der Gesamtlänge des Rohrelements mit Rücksprüngen (126a, 126b, 226a, 226b, 326a, 326b) ausgebildet sind, wovon sich mindestens ein Rücksprung (126a, 126b, 226a, 326a, 326b), wenn sich die Isolierung an ihrem Platz im Basiselement befindet, in eine Verbindungsstelle (115a, 115b, 215a, 315a, 315b) des Flachsegments und des Seitenwandsegments (114a, 114b, 214a, 314a, 314b) des Außenmantels einfügt.

3. Rohrelement nach einem der vorstehend aufgeführten Ansprüche, bei dem das Abdeckelement an der äußeren Oberfläche seiner Isolierung entlang der Gesamtlänge des Rohrelements mindestens eine isolierende Feder (149a, 249a, 349a) aufweist, wobei die mindestens eine isolierende Feder so ausgebildet ist, dass sie in mindestens eine isolierende Nut (129b, 229b, 329b) passt, die in der äußeren Oberfläche der Isolierung des Basiselements entlang der Gesamtlänge des Rohrelements vorgesehen ist, und/oder wobei das Basiselement an der äußeren Oberfläche seiner Isolierung entlang der Gesamtlänge des Rohrelements mindestens eine isolierende Feder (129a, 229a, 329a) entlang der Gesamtlänge des Rohrelements aufweist, wobei die mindestens eine isolierende Feder so ausgebildet ist, dass sie in mindestens eine isolierende Nut (149b, 249b, 349b) in der äußeren Oberfläche der Isolierung des Abdeckelements entlang der Gesamtlänge des Rohrelements passt.

4. Rohrelement nach einem der vorstehend aufgeführten Ansprüche, bei dem jede Nut des Basiselements mindestens eine Rohrabstützung (150, 250, 350) zum Sichern eines Rohrs am Rohrelement aufweist.

5. Rohrelement nach einem der vorstehend aufgeführten Ansprüche, bei dem es sich bei dem Material für Isolierungen im Basiselement und im Abdeckelement um geschäumtes Polystyrol, extrudiertes Polystyrol oder Polyurethan handelt.

6. Rohrelement (100) nach einem der vorstehend aufgeführten Ansprüche, bei dem die beiden Enden (138a, 138b) des Außenmantels (136) des Abdeckelements (130) so ausgebildet sind, dass sie sich über die Isolierung (140) legen, wobei die beiden Ecken (145a, 145b) der Isolierung (140) des Abdeckelements (130) entlang der Gesamtlänge des Rohrelements (100) Rücksprünge (146a, 146b) aufweisen, die sich, wenn sich die Isolierung (140) an ihrem Platz im Abdeckelement (130) befindet, in Zusammenfügungen (135a, 135) des Flachsegments (132) und der Seitenwandsegmente (134a, 134b) des Außenmantels (136) einfügen, wobei die beiden Ecken (127a, 127b, 147a, 147b) der Isolierungen (120, 140) des Basiselements (110) und des Abdeckelements (130) entlang der Gesamtlänge des Rohrelements Rücksprünge (128a, 128b, 148a, 148b) aufweisen, die sich, wenn sich die Isolierungen (120, 140) an ihrem Platz im Basiselement (110) und im Abdeckelement (130) befinden, in Zusammenfügungen (119a, 119b, 139a, 139b) der Seitenwandsegmente (114a, 114b, 134a, 134b) ihres Außenmantels (116, 136) einfügen, und wobei sich die Enden (118a, 118b, 138a, 138b) des Außenmantels (116, 136) über die Isolierungen (120, 140) legen.

7. Rohrelement (200, 300) nach einem der Ansprüche 1 bis 5, das weiterhin einen Raum (260, 360) zum Installieren mindestens eines Strom- oder Telekommunikationskabels im Rohrelement beinhaltet.

8. Rohrelement (200) nach Anspruch 7, das weiterhin Konsolen an der inneren Oberfläche (217) des Außenmantels (216) des Basiselements (210) zum Befestigen mindestens eines Strom- oder Telekommunikationskabels am Basiselement (210) sowie eine zusätzliche Isolierung (221) beinhaltet, die gegen das Seitenwandsegment (214b) des Außenmantels (216) des Basiselements (210) montiert ist und worauf sich oben das andere umgelegte Ende (218b) des Außenmantels (216) des Basiselements (210) einfügt.

9. Rohrelement (300) nach Anspruch 7, bei dem eine äußere Oberfläche (342) der Isolierung (340) des Abdeckelements (330) mindestens drei Nuten (344, 345) zum Installieren von Rohren im Rohrelement aufweist, wobei an beiden Seiten einer Nut (345) Raumzungen (341) entlang der Gesamtlänge des Rohrelements vorgesehen sind, wobei die Isolierung (320a, 320b) des Basiselements (310) aus zwei separaten Eckisolierungen (320a, 320b) gebildet ist, die beide an ihrer äußeren Oberfläche (322a, 322b) mindestens eine Nut (324) aufweisen und sich an Zusammenfügungen (315a, 315b) des Flachsegments (312) und der Seitenwandsegmente (314a, 314b) des Außenmantels (316) des Basiselements (310) in einer solchen Weise einfügen, dass sich die Raumzungen (341), wenn das Abdeckelement (330) am Basiselement (310) befestigt wird, in die Isolierungen (320a, 320b) des Basiselements (310) einfügen, so dass zwischen den Raumzungen (341) ein Raum (360) zum Installieren mindestens eines Strom- oder Telekommunikationskabels entsteht.

10. Rohrelement nach Anspruch 9, bei dem der Raum (360) im Basiselement (310) mindestens eine an der inneren Oberfläche (317) des Außenmantels (316) montierte Rohrabstützung (350) hat.

## Revendications

1. Élément (100, 200, 300) pour tuyau destiné à isoler au moins un tuyau, ledit élément pour tuyau comportant
un composant (110, 210, 310) de base, qui permet la fixation de l'élément pour tuyau à une surface de montage et qui comporte une coque extérieure (116, 216, 316) composée d'un segment plat (112, 212, 312) et des segments (114a, 114b, 214a, 214b, 314a, 314b) de parois latérales, ainsi qu'au moins une isolation (120, 220, 320a, 320b, 321) installée contre une surface interne (117, 217, 317) du segment plat de la coque extérieure et dont la surface extérieure (122, 222, 322a, 322b) est formée avec au moins une rainure (124, 224, 324) destinée à installer au moins un tuyau dans l'élément pour tuyau, les extrémités (118a, 118b, 218a, 218b, 318a, 318b) de la coque extérieure dans ledit composant de base étant prévues pour se recourber par-dessus l'isolation, et
un composant (130, 230, 330) de couverture, qui est prévu pour se fixer au composant de base et qui comporte une coque extérieure (136, 236, 336) composée d'un segment plat (132, 232, 332) et de segments (134a, 134b, 234a, 234b, 334a, 334b) de parois latérales, ainsi qu'une isolation (140, 240, 340) installée au moins contre une surface interne (137, 237, 337) de segment plat de la coque extérieure et dont la surface extérieure (142, 242, 342) est formée avec au moins une rainure (144, 244, 344) destinée à installer au moins un tuyau dans l'élément pour tuyau, les extrémités (138a, 138b, 238a, 238b, 338a, 338b) de la coque extérieure dans ledit composant de couverture étant prévues pour se recourber dans la même direction que les extrémités de la coque extérieure du composant de base,
**caractérisé en ce que**
le composant de couverture présente des coins (145a, 145b, 245a, 245b, 345a, 345b) de son isolation munis, sur toute la longueur de l'élément pour tuyau, d'évidements (146a, 146b, 246a, 246b, 346a, 346b), parmi lesquels au moins un évidement (146a, 146b, 246a, 346a, 346b) se positionne, lorsque l'isolation est en place dans le composant de couverture, contre une jonction (135a, 135b, 235a, 335a, 335b) du segment plat et du segment de paroi latérale (134a, 134b, 234a, 334a, 334b) de sa coque extérieure, et
le composant de base et le composant de couverture présentent des coins (127a, 127b, 147a, 147b, 227a, 227b, 247a, 247b, 327a, 327b, 347a, 347b) de leurs isolations munis, sur la longueur de l'élément pour tuyau, d'évidements (128a, 128b, 148a, 148b, 228a, 228b, 248a, 248b, 328a, 328b, 348a, 348b), parmi lesquels au moins un évidement (128a, 128b, 148a, 148b, 228a, 248a, 328a, 328b, 348a, 348b) du composant de base et du composant de couverture se positionne, lorsque les isolations (120, 220, 320a, 320b, 140, 240, 340) sont en place dans le composant de base et dans le composant de couverture, contre des jonctions (119a, 119b, 219a, 319a, 319b, 139a, 139b, 239a, 339a, 339b) de parois latérales (114a, 114b, 214a, 314a, 314b, 134a, 134b, 234a, 334a, 334b) de leur coque extérieure et d'extrémités (118a, 118b, 218a, 318a, 318b, 138a, 138b, 238a, 338a, 338b) de la coque extérieure recourbées par-dessus les isolations, et qui permettent une déformation d'extrémités de la coque extérieure de façon à entrer dans les évidements, les extrémités de la coque extérieure se positionnant ainsi dans une relation d'affleurement avec la surface extérieure des isolations.

2. Élément pour tuyau selon la revendication 1, le composant de base présentant des coins (125a, 125b, 225a, 225b, 325a, 325b) de son isolation munis, sur toute la longueur de l'élément pour tuyau, d'évidements (126a, 126b, 226a, 226b, 326a, 326b), parmi lesquels au moins un évidement (126a, 126b, 226a, 326a, 326b) se positionne, lorsque l'isolation est en place dans le composant de base, contre une jonction (115a, 115b, 215a, 315a, 315b) du segment plat et du segment de paroi latérale (114a, 114b, 214a, 314a, 314b) de sa coque extérieure.

3. Élément pour tuyau selon l'une quelconque des revendications précédentes, la surface extérieure de l'isolation du composant de couverture étant munie, sur toute la longueur de l'élément pour tuyau, d'au moins un tenon mâle (149a, 249a, 349a) d'isolation, ledit ou lesdits tenons mâles d'isolation étant prévus pour être installés dans au moins une rainure femelle (129b, 229b, 329b) d'isolation présente dans la surface extérieure de l'isolation du composant de base sur toute la longueur de l'élément pour tuyau, et/ou la surface extérieure de l'isolation du composant de base étant munie, sur toute la longueur de l'élément pour tuyau, d'au moins un tenon mâle (129a, 229a, 329a) d'isolation sur toute la longueur de l'élément pour tuyau, ledit ou lesdits tenons mâles d'isolation étant prévus pour être installés dans au moins une rainure femelle (149b, 249b, 349b) d'isolation présente dans la surface extérieure de l'isolation du composant de couverture sur toute la longueur de l'élément pour tuyau.

4. Élément pour tuyau selon l'une quelconque des revendications précédentes, chaque rainure du composant de base étant équipée d'au moins un appui (150, 250, 350) de tuyau servant à fixer un tuyau à l'élément pour tuyau.

5. Élément pour tuyau selon l'une quelconque des revendications précédentes, le matériau des isolations dans le composant de base et dans le composant de couverture étant du polystyrène expansé, du polystyrène extrudé ou du polyuréthane.

6. Élément (100) pour tuyau selon l'une quelconque des revendications précédentes, les deux extrémités (138a, 138b) de la coque extérieure (136) du composant (130) de couverture étant prévues pour se recourber par-dessus l'isolation (140), les deux coins (145a, 145b) de l'isolation (140) du composant (130) de couverture étant munis, sur toute la longueur de l'élément (100) pour tuyau, d'évidements (146a, 146b), qui se positionnent, lorsque l'isolation (140) est en place dans le composant (130) de couverture, contre des conjonctions (135a, 135) du segment plat (132) et des segments (134a, 134b) de parois latérales de sa coque extérieure (136), et les deux coins (127a, 127b, 147a, 147b) des isolations (120, 140) du composant (110) de base et du composant (130) de couverture étant munis, sur toute la longueur de l'élément pour tuyau, d'évidements (128a, 128b, 148a, 148b), qui se positionnent, lorsque les isolations (120, 140) sont en place dans le composant (110) de base et dans le composant (130) de couverture, contre des conjonctions (119a, 119b, 139a, 139b) des segments (114a, 114b, 134a, 134b) de parois latérales de leur coque extérieure (116, 136) et des extrémités (118a, 118b, 138a, 138b) de la coque extérieure (116, 136) recourbées par-dessus les isolations (120, 140).

7. Élément (200, 300) pour tuyau selon l'une quelconque des revendications 1-5, comprenant en outre un espace (260, 360) destiné à installer au moins un câble d'alimentation ou de télécommunications dans l'élément pour tuyau.

8. Élément (200) pour tuyau selon la revendication 7, comprenant en outre des supports établis sur la surface interne (217) de la coque extérieure (216) du composant (210) de base pour la fixation d'au moins un câble d'alimentation ou de télécommunications au composant (210) de base et une isolation supplémentaire (221), qui est installée contre le segment de paroi latérale (214b) de la coque extérieure (216) du composant (210) de base et par-dessus laquelle se positionne l'autre extrémité déformée (218b) de la coque extérieure (216) du composant (210) de base.

9. Élément (300) pour tuyau selon la revendication 7, une surface extérieure (342) de l'isolation (340) du composant (330) de couverture étant formée avec au moins trois rainures (344, 345) destinées à installer des tuyaux dans l'élément pour tuyau, et des tenons (341) d'espacement étant établis de part et d'autre d'une rainure (345) sur toute la longueur de l'élément pour tuyau, l'isolation (320a, 320b) du composant (310) de base étant constituée par deux isolations (320a, 320b) de coin distinctes, toutes deux dotées d'une surface extérieure (322a, 322b) formée avec au moins un rainure (324) et qui se positionnent au niveau de conjonctions (315a, 315b) du segment plat (312) et des segments de parois latérales (314a, 314b) de la coque extérieure (316) du composant (310) de base de telle façon que, lors de la fixation du composant (330) de couverture au composant (310) de base, les tenons (341) d'espacement se positionnent contre les isolations (320a, 320b) du composant (310) de base en établissant entre les tenons (341) d'espacement un espace (360) destiné à installer au moins un câble d'alimentation ou de télécommunications.

10. Élément pour tuyau selon la revendication 9, l'espace (360) dans le composant (310) de base comprenant au moins un appui (350) de tuyau monté sur la surface interne (317) de la coque extérieure (316).
